# EUROPÄISCHE PATENTANMELDUNG

(11) **EP 1 671 779 A2**
(43) Veröffentlichungstag der Anmeldung: **21.06.2006**
(21) Anmeldenummer: 05111635.8
(22) Anmeldetag: 02.12.2005
(51) Int. Cl.: B29C 47/82

(54) **Kühlung einer Kunststoffverarbeitungsmaschine**

(30) Priorität: 18.12.2004 DE 102004061068
(71) Anmelder: Battenfeld Extrusionstechnik GmbH, 32547 Bad Oeynhausen (DE)
(72) Erfinder: Mülke, Ralf, 32549, Bad Oeynhausen (DE)

(57) **Zusammenfassung**

Die Erfindung betrifft eine Maschine zum Plastifizieren und Homogenisieren von Kunststoffen, die mindestens einen temperierten Außenmantel (1) aufweist, wobei der Außenmantel (1) mehrschichtig aufgebaut ist und mindestens zwei der Schichten eine integrierte Kühlwendel (2) bilden.

Erfindungsgemäß ist vorgesehen, dass die Kühlwendel (2) mehrgängig ausgeführt ist, wodurch einzelne Kanäle (3) entstehen, die unabhängig voneinander mit einem Kühlmedium beaufschlagbar sind.

Weiterhin betrifft die Erfindung ein Verfahren zum Kühlen einer Kunststoffverarbeitungsmaschine, bei der mindestens ein Außenmantel (1) eine Kühlwendel (2) aufweist, die mit einem Kühlmedium beaufschlagt wird.

Hierbei ist erfindungsgemäß vorgesehen, dass während oder nach der Beaufschlagung der Kühlwendel (2) mit dem Kühlmedium zusätzlich Druckluft eingegeben wird.

## Beschreibung

Die Erfindung betrifft eine Maschine zum Plastifizieren und Homogenisieren von Kunststoffen, die mindestens einen temperierten Außenmantel aufweist, wobei der Außenmantel mehrschichtig aufgebaut ist und mindestens zwei der Schichten eine integrierte Kühlwendel (2) bilden. Weiterhin betrifft die Erfindung ein diesbezügliches Verfahren.

Es sind unterschiedliche Temperiersystem bei gattungsgemäßen Kunststoffverarbeitungsmaschinen bekannt. Besonders für das System Planetwalzenextruder ist eine effektive Temperierung wichtig, weil der Planetwalzenextruder eine hohe Oberflächenerneuerung aufweist und als einer der wenigen Extruder einen echten Wärmeaustausch ermöglicht. Bei einem Planetwalzenextruder werden typischerweise eine oder mehrere Zonen am Walzenzylinder und die Hauptspindel temperiert.

Für die Walzenzylinder existieren folgende Systeme:
- Kombination aus Luftkühlung und elektrischer Beheizung
- Temperierkanäle im Walzenteil, die medientemperiert werden (Öl oder Wasser), wobei jeweils die Medien auf Solltemperatur gebracht werden und durch das Walzenteil geleitet werden.

Letztere haben sich besonders in den letzten Jahren durchgesetzt.

Bekannterweise ist die Effizienz der Luftkühlung gering, weil die spezifische Wärmekapazität der Luft gegenüber Öl und Wasser gering ist.

Öltemperierung ist faktisch nur einsetzbar bei Solltemperaturen größer 100°C und somit für viele Kühl- oder Wärmeabführaufgaben nicht empfehlenswert. Die Obergrenze für Öltemperierung liegt bei ca. 250-350°C, weil sich Öl bei höheren Temperaturen zersetzt.

Wasser ist hervorragend für Solltemperaturen unter 100°C und somit für Kühlaufgaben geeignet. Temperaturen über 160°C sind wegen der enormen Dampfdrücke nur eingeschränkt mit hohem technischen Aufwand nutzbar. Über 250°C stehen Kosten und Nutzen in keinem vernünftigen Verhältnis mehr. In allen Temperaturbereichen wird bei der Wassertemperierung nicht die Verdampfungsenthalpie genutzt, wobei die Verdampfungswärme den höchsten Energietransport ermöglicht. Es wird ausschließlich die spez. Wärme von 4,19kJ/kg*K genutzt. Nachteilig ist ebenfalls, dass bei Medientemperierung die Temperaturerfassung des Temperiermediums in der Regel im Temperiergerät stattfindet und nicht, wie sinnvoll, am Prozessteil (hier Walzenteil). Über mehr oder minder lange Wege vom Temperiergerät zum Walzenteil findet ein mitunter nicht unerheblicher Energieverlust an den Rohrleitungen und zu installierenden Pumpleistungen statt.

Aufgabe der Erfindung ist es, eine Temperierung sowie ein Verfahren zur Temperierung für eine Kunststoffverarbeitungsanlage anzubieten, die/das die Vorteile der bekannten Systeme kombiniert bzw. optimiert und die vorherrschenden Nachteile kompensiert, wobei ein erhöhtes Leistungs-/Kostenverhältnis erreicht werden soll.

Die Lösung der Aufgabe bezüglich der Vorrichtung ist in Verbindung mit dem Oberbegriff des Anspruches 1 dadurch gekennzeichnet, dass die Kühlwendel (2) mehrgängig ausgeführt ist, wodurch einzelne Kanäle (3) entstehen, die unabhängig voneinander mit einem Kühlmedium beaufschlagbar sind.

Es kann somit gezielt an bestimmten Bereichen des Außenmantels (1) die Kühlung eingreifen.

Weiterbildungsgemäß ist vorgesehen, dass die Kühlwendel (2) und/oder die Kanäle (3) des Außenmantels (1) mit einem Anschluß für Druckluft versehen sind. Es ist aber auch denkbar, dass an der Kühlwendel (2) mehrere Anschlüsse für Druckluft vorgesehen sind. Durch die zusätzliche Beaufschlagung des Kühlmediums, hier wird im Übrigen in erster Linie an Wasser gedacht, wird erreicht, dass das Kühlmedium gleichmäßiger und schneller über die Länge der Kühlwendel (2) bzw. der Kanäle (3) verteilt wird. Es entsteht somit ein Sprüheffekt ähnlich einer Beaufschlagung mit Mineralwasser.

Das System kann für einen Ein- oder Doppelschneckenextruder vorgesehen werden, wobei der Schneckenzylinder der Außenmantel ist.

Besonders vorteilhaft bietet sich das System zum Einsatz in einem Planetwalzenextruder mit einer angetriebenen Zentralspindel, mehrere um die Zentralspindel angeordneten Planetspindeln und mindestens einem innenverzahnten Walzenteil als Außenmantel (1) an.

Damit die Temperierung vorteilhafte ausgestaltet werden kann ist vorgesehen, den Außenmantel (1) zusätzlich mit einer Heizung, beispielsweise einer elektrischen Heizung, auszustatten.

Die Lösung der Aufgabe bezüglich des Verfahrens ist in Verbindung mit dem Oberbegriff des Anspruches 1 dadurch gekennzeichnet, dass während oder nach der Beaufschlagung der Kühlwendel (2) mit dem Kühlmedium zusätzlich Druckluft eingegeben wird. Die dadurch erreichten Vorteile bezüglich der besseren Verteilung sind bereits oben beschrieben.

Vorteilhafterweise wird die Druckluft unstetig oder profilartig eingegeben, damit die Verwirbelung des Kühlmediums verstärkt wird.

In einer vorteilhaften Weiterbildung ist vorgesehen, dass die Druckluft an mehren Stellen in die Kühlwendel (2) eingegeben wird.

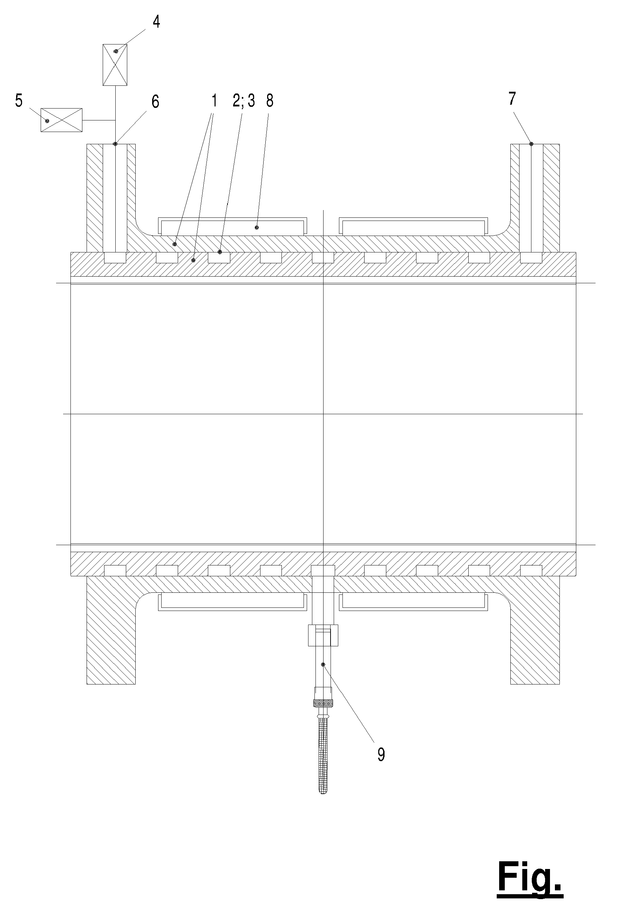

In den Zeichnungen ist ein Ausführungsbeispiel der Erfindung schematisch dargestellt, es zeigt die Figur das vorgeschlagene System anhand eines Walzenteils eines Planetwalzenextruders. Das Walzenteil weist einen zweiteiligen Außenmantel 1 auf, in dem die Kühlwendel mit mehreren Gängen und somit mit mehreren Kanälen 3 zu sehen ist.

Die Kühlwendel 2, 3 ist sowohl mit einem Einlaß 6 als auch mit einem Auslass 7 verbunden. Sollten mehrere Kanäle 3 einzeln angesteuert werden so müssen mehrere Ein- und Auslässe angeordnet werden. Der Einlass 6 ist mit einem Kühlmittelventil 4 und mit einem Druckluftventil 5 verbunden, damit sowohl das Kühlmittel als auch die Druckluft, entweder gleichzeitig oder zeitlich versetzt, in die Kühlwendel 2 bzw. den oder die Kanäle 3 eingebracht werden kann.

Zur besseren Temperierung sind des weiteren Heizbänder 8 um das Walzenteil 1 angeordnet. Damit der gesamte Prozess kontrollier-, regel-und/oder steuerbar ist, ist ein Thermofühler angeordnet, der die vorherrschende Temperatur misst. Eine Verbindung zur Maschinensteuerung ermöglicht die Überwachung mit einer Solltemperatur und kann bei Abweichungen entsprechende Korrekturmaßnahmen einleiten (Kühlen oder Heizen).

### Bezugszeichenliste:

- 1: Außenmantel
- 2: Kühlwendel
- 3: Kanal
- 4: Kühlmittelventil
- 5: Druckluftventil
- 6: Einlass Kühlkanal
- 7: Auslass Kühlkanal
- 8: Heizband
- 9: Thermofühler

## Patentansprüche

1. Maschine zum Plastifizieren und Homogenisieren von Kunststoffen, die mindestens einen temperierten Außenmantel (1) aufweist, wobei der Außenmantel (1) mehrschichtig aufgebaut ist und mindestens zwei der Schichten eine integrierte Kühlwendel (2) bilden,
**dadurch gekennzeichnet, dass**
die Kühlwendel (2) mehrgängig ausgeführt ist, wodurch einzelne Kanäle (3) entstehen, die unabhängig voneinander mit einem Kühlmedium beaufschlagbar sind.

2. Maschine nach Anspruch 1, **dadurch gekennzeichnet, dass** die Kühlwendel (2) und/oder die Kanäle (3) des Außenmantels (1) mit einem Anschluß für Druckluft versehen sind.

3. Maschine nach Anspruch 1 **dadurch gekennzeichnet, dass** an der Kühlwendel (2) mehrere Anschlüsse für Druckluft vorgesehen sind.

4. Maschine nach einem der Ansprüche 1 bis 3, **dadurch gekennzeichnet, dass** die Maschine ein Ein- oder Doppelschneckenextruder ist, wobei der Schneckenzylinder der Außenmantel (1) ist.

5. Maschine nach einem der Ansprüche 1 bis 3, **dadurch gekennzeichnet, dass** die Maschine ein Planetwalzenextruder mit einer angetriebenen Zentralspindel, mehrere um die Zentralspindel angeordneten Planetspindeln und mindestens einem innenverzahnten Walzenteil als Außenmantel (1) ist.

6. Verfahren zum Kühlen einer Kunststoffverarbeitungsmaschine, bei der mindestens ein Außenmantel (1) eine Kühlwendel (2) aufweist, die mit einem Kühlmedium beaufschlagt wird,
**dadurch gekennzeichnet, dass**
während oder nach der Beaufschlagung der Kühlwendel (2) mit dem Kühlmedium zusätzlich Druckluft eingegeben wird.

7. Verfahren nach Anspruch 6, **dadurch gekennzeichnet, dass** die Druckluft unstetig oder profilartig eingegeben wird.

8. Verfahren nach einem der Ansprüche 6 oder 7, **dadurch gekennzeichnet, dass** die Druckluft an mehren Stellen in die Kühlwendel (2) eingegeben wird.
